# EUROPÄISCHE PATENTANMELDUNG

(11) **EP 2 006 223 A1**
(43) Veröffentlichungstag der Anmeldung: **24.12.2008**
(21) Anmeldenummer: 08003231.1
(22) Anmeldetag: 22.02.2008
(51) Int. Cl.: B65G 1/02, A47B 57/10, A47F 5/00

(54) **Kommissionierregal für Montageteile**

(30) Priorität: 19.06.2007 DE 102007028131
(71) Anmelder: Dr. Ing. h.c. F. Porsche Aktiengesellschaft, 70435 Stuttgart (DE)
(72) Erfinder: Spahn, Lothar, 74354 Besigheim (DE); Eckert, Heinz, 71287 Weissach (DE)

(57) **Zusammenfassung**

Die Erfindung betrifft ein Kommissionierregal (1) für Montageteile mit mehreren, in unterschiedlichen Ebenen angeordneten Führungsvorrichtungen, in denen mindestens ein Regalboden (33, 34) verschiebbar gehalten ist, wobei der Regalboden (33, 34) flächenmäßig nur einen Teilbereich der von der Führungsvorrichtung aufgespannten Verschiebefläche einnimmt. Um die Eignung eines gattungsgemäßen Kommissionierregals für den Einsatz in der Motorenfertigung zu erhöhen, wird vorgeschlagen, dass der Regalboden (33, 34) in seiner Führungsvorrichtung zwischen einem den Verschiebeweg begrenzenden vorderen Anschlag und einem hinteren Anschlag verschiebbar gehalten ist.

## Beschreibung

Die Erfindung betrifft ein Kommissionierregal für Montageteile gemäß dem Oberbegriff des Patentanspruchs 1.

Für die Montage von mehrteiligen Bauteilen oder Maschinen ist es notwendig, die einzelnen Montageteile am Montageplatz zur Verfügung zu stellen. Dafür ist es üblich, ein Kommissionierregal vorzusehen, aus dem die Montageperson die für die zu montierende Maschine bereitgestellten Montageteile entnehmen kann. Ein solcher Montageplatz ist beispielsweise in der DE 102 43 477 A1 beschrieben, bei dem ein nicht näher ausgeführtes Kommissionierregal neben einem Traggestell für eine Brennkraftmaschine angeordnet ist und auf einem Montageband mitläuft.

Ein gattungsgemäßes Kommissionierregal ist aus der europäischen Patentschrift EP 0 776 308 B1 bekannt geworden, bei dem in mehreren unterschiedlichen Ebenen Regalböden verschiebbar gehalten sind. Die Regalböden sind flächenmäßig kleiner als die von der Führungsvorrichtung aufgespannte Verschiebefläche. Das hat den Vorteil, dass mehrere Regalböden in eine Führungsvorrichtung eingeschoben werden können. Die Regalböden sind untereinander durch hakenförmige Ansätze ineinander verhakbar. Dadurch kann der jeweils hintere Regalboden bei Herausziehen des vorderen Regalbodens mit nach vorne gezogen werden.

Die Aufgabe der Erfindung besteht darin, die Eignung eines gattungsgemäßen Kommissionierregals für den Einsatz in der Motorenfertigung zu verbessern.

Ein erfindungsgemäßes Kommissionierregal umfasst mehrere, in unterschiedlichen Ebenen angeordnete Führungsvorrichtungen, in denen mindestens ein Regalboden verschiebbar gehalten ist. Der Regalboden nimmt flächenmäßig nur einen Teilbereich der von der Führungsvorrichtung aufgespannten Verschiebefläche ein und ist in seiner Führungsvorrichtung zwischen einem den Verschiebeweg begrenzenden vorderen Anschlag und einem hinteren Anschlag verschiebbar gehalten. Dadurch lässt sich der vorzugsweise einzelne Regalboden innerhalb der Führungsvorrichtung frei verschieben und zwar über eine gegenüber der Regalbodenfläche größeren Verschiebefläche zwischen eben diesen beiden Anschlagpositionen. Im Gegensatz zum Stand der Technik kann der Regalboden nicht herausgezogen werden und auch nicht über das Gestell des Kommissionierregals hinausstehen, so dass die Verletzungsgefahr reduziert werden kann. Das Kommissionierregal eignet sich besonders zur Mitnahme und zum Transport auf einem Montageband wie es in der DE 102 43 477 A1 beschrieben ist. Dann ist das erfindungsgemäße Kommissionierregal neben dem Traggestell für den Motor auf der gewichtsausgleichenden Palette mit befestigt. Der Inhalt der Offenbarung der DE 102 43 477 A1 bezüglich der Anordnung des Kommissionierregals auf einer Montageeinrichtung für Brennkraftmaschinen wird hiermit ausdrücklich in die Beschreibung aufgenommen. Von Vorteil ist weiterhin, dass die Regalböden in Abhängigkeit ihrer Nutzung nach vorne oder nach hinten verschiebbar sind. Ist nämlich ein Montageteil von einem oberen Regalboden entnommen, wird der betroffene Regalboden in seine hintere Position verschoben, wodurch der darunter befindliche Regalboden mit seinem darauf abgelegten Montageteil besser zugänglich wird.

Im Rahmen der Erfindung wird unter Verschiebefläche die Fläche verstanden, auf der sich der Regalboden bewegen kann. Die Größe der Verschiebefläche wird über die Führungsvorrichtung definiert, die in der Regel aus Führungsschienen gebildet ist.

Eine einfache Bauweise für die Verschiebefläche wird realisiert, wenn die Führungsvorrichtung durch zwei gegenüberliegende Führungsschienen gebildet ist, die zusammen ein Führungsschienenpaar bilden.

In einer bevorzugten Ausführungsform erstrecken sich die Führungsschienen auf gleicher Höhe, um eine ebene Ablagefläche zu bilden.

Die Fläche des Kommissionierregals kann durch eine bestimmte Fläche eines Grundrahmens bestimmt werden. Auf diesem Grundrahmen stehen aufrechte Pfosten, um einen Rahmen für das Kommissionierregal zu bilden.

Eine stabile Ausgestaltung ergibt sich, wenn die oberen Enden der Pfosten durch einen Tragrahmen miteinander verbunden sind.

Der Regalboden kann an seinen, den Führungsschienen zugewandten Seitenkanten einen Gleitstein aufweisen, um einen Eingriff in die Führungsschienen zu ermöglichen. Alternativ ist auch ein Nutstein möglich. Die Auswahl von Gleitsteinen lässt einen reibungsarmen Leichtlauf in der Führungsschiene zu.

Damit Montageteile nicht vom Regalboden fallen oder rutschen können, weist der Regalboden an seinen den Führungsschienen nicht zugewandten Seitenkanten eine nach oben abgewinkelte Stirnkante auf.

Wenn der vordere bzw. hintere Anschlag durch eine Stirnfläche des jeweiligen Gleitsteins gebildet ist, der an einer Innenfläche des entsprechenden Pfostens anschlägt, werden keine zusätzlichen Bauteile benötigt, um einen vorderen und einen hinteren Anschlag zu realisieren. Es kann mit vorhandenen Bauteilen, wie dem Gleitstein und der Pfosten ein entsprechender Anschlag realisiert werden.

Damit der Regalboden nicht über die Grundfläche des Kommissionierregals hinausragt, schließen die nach oben abgewinkelten Stirnkanten in ihren jeweiligen Anschlagpositionen flächenbündig mit einer Außenfläche der Stähle ab. Damit kann die Montageperson nicht an überstehenden Regalböden hängen bleiben. Die Verletzungsgefahr wird reduziert.

Für große Teile kann es sinnvoll sein, mit zwei Regalböden eine ebene Auflagefläche zu erzeugen. Dies kann erreicht werden, indem über einem Führungsschienenpaar in unmittelbarer Anlage ein zweites Führungsschienenpaar angeordnet ist. Der eine Regalboden kann dann in seine hinterste und der andere Regalboden in seine vorderste Position geschoben werden; oder umgekehrt. Der zwangsläufig durch den Höhenversatz der Führungsnuten entstehende kleine Absatz zwischen beiden Regalböden kann durch Verzicht auf die winkelförmig abstehenden Stirnkanten reduziert werden.

Weitere vorteilhafte Ausgestaltungen der Erfindung werden im Folgenden anhand der Zeichnung näher erläutert. Dabei zeigen:
- Fig. 1: eine perspektivische Darstellung eines Kommissionierregals,
- Fig. 2: eine mögliche Anordnung der Regalböden in einem Kommissionierregal in beladenem und teilentleertem Zustand,
- Fig. 3: eine Anordnung der Regalböden in einer zweiten Ausgestaltungsform des Kommissionierregals in beladenem und in teilentleertem Zustand,
- Fig. 4: die Anordnung der Führungsschienen für eine Ausführungsform gemäß Fig. 3 des Kommissionierregals sowie
- Fig. 5: eine mögliche Anordnung des Kommissionierregals in einer Einrichtung zur Montage von Brennkraftmaschinen.

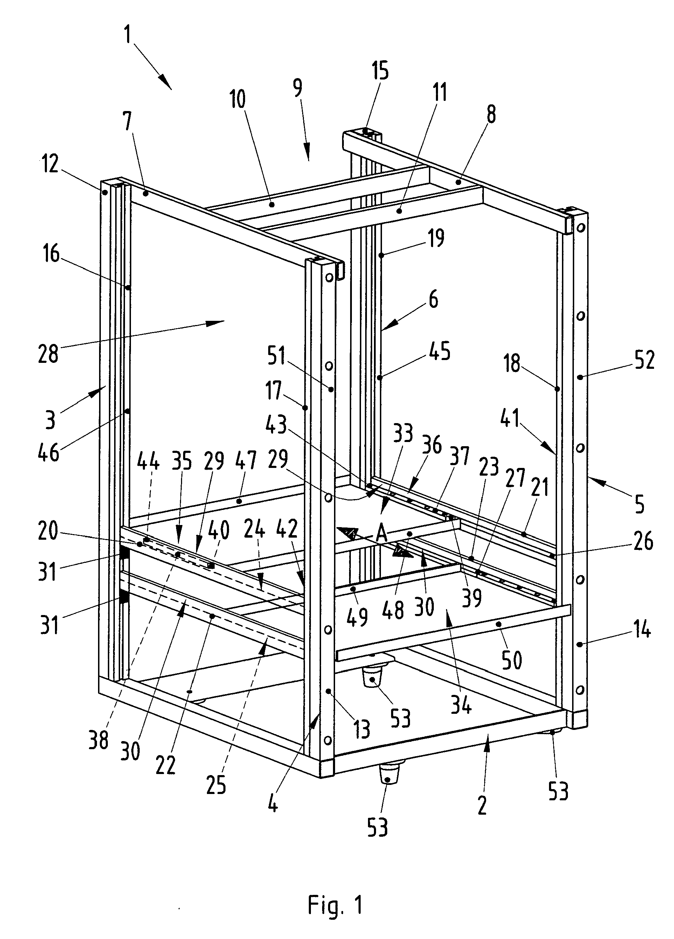

Das in Fig. 1 gezeigte Kommissionierregal 1 umfasst einen Grundrahmen 2, auf dessen Ecken jeweils ein Pfosten 3, 4, 5 und 6 aufrecht befestigt ist. Die oberen Enden der Pfosten 3 und 4 bzw. 5 und 6 sind durch zwei Holme 7 und 8, die zu einem Tragrahmen 9 gehören, miteinander verbunden. Die Holme 7 und 8 sind wiederum durch ebenfalls zum Tragrahmen gehörenden Querträger 10 und 11 gegenseitig abgestützt.

Jeder der Pfosten 3, 4, 5 und 6 ist in dieser Ausführung aus einem geschlossenen Vierkant-Rohrprofil 12, 13, 14 und 15 und einer senkrechten, an einer Seite des Vierkant-Rohrprofils befestigten Schiene 16, 17, 18, 19 zusammengesetzt. Die Schiene 16 ist dabei so angeordnet, dass sie der Schiene 17 vis a vis gegenüberliegt. Genauso verhält es sich mit der Schiene 19 und der Schiene 18.

Die Schienen 16 bis 19 dienen zur Fixierung von Führungsschienen 20, 21, 22, 23, die mit ihren Führungsnuten 24 bis 27 nach innen, d.h. in den von den Pfosten 3 bis 6 gebildeten quaderförmigen Raum 28, ausgerichtet sind. Dabei bilden die Führungsschienen 21 und 20 ein Führungsschienenpaar 29, während die Führungsschienen 22 und 23 ein Führungsschienenpaar 30 bilden. Die jeweils zu einem Führungsschienenpaar 29 bzw. 30 gehörenden Führungsschienen sind auf gleicher Höhe mit einem Fixierstein 31 in der Schiene 16, 17, 18, 19 gesichert. Zwischen den Führungsschienen 21 und 20 erstreckt sich ein Regalboden 33, während sich zwischen den Führungsschienen 23 und 22 ein Regalboden 34 erstreckt. Die vom Regalboden 33, 34 bedeckte Fläche ist wesentlich geringer als die durch die Führungsschienen aufgespannte Fläche, die im wesentlichen der Fläche des rechteckigen Grundrahmens 2 entspricht.

Der Regalboden 33 weist an seinen beiden, den Führungsschienen zugewandten Seitenkanten 35 und 36 jeweils einen Gleitstein 37, 38 auf, der in die jeweilige Führungsnut 26 bzw. 24 eingreift und bewirkt, dass sich der Regalboden 33 gemäß Pfeilrichtung A hin- und herschieben lässt.

Der vordere Anschlag für den Regalboden 33 wird gebildet, indem die vorderen Stirnseiten 39, 40 des Gleitsteins 37, 38 an die Innenseiten 41, 42 der Pfosten 4 und 5 anschlägt.

Der hintere Anschlag wird gleichermaßen gebildet, indem die hintere Stirnseite 43, 44 an die inneren Seiten 45, 46 der hinteren Pfosten 3 und 6 anschlägt.

Der Verschiebeweg, den der Regalboden 33 zurücklegen kann, liegt also zwischen einer vorderen Anschlagposition und einer hinteren Anschlagposition.

Die nicht den Führungsschienen 20, 21, 22, 23 zugewandten Seitenkanten sind als nach oben abgewinkelte Stirnseiten 47, 48, 49, 50 ausgebildet. Dadurch werden Bauteile, die auf den Regalböden abgelegt werden, am Herunterfallen gehindert. In der vordersten Anschlagposition schließt die Stirnseite 48 bzw. 50 flächenbündig mit einer Außenseitenfläche 51 bzw. 52 der Pfosten 4 bzw. 5 ab. Auf der in Fig. 1 nicht sichtbaren Rückseite verhält es sich genauso mit den Stirnseiten 47 und 49 und den entsprechenden Außenseitenflächen.

An der Unterseite des Grundrahmens 2 sind Füße 53 vorgesehen, die in entsprechende Aussparungen am Boden einer Montagehalle oder auf einem Montagetransportband oder einer Palette vorgesehen sind.

Der Übersichtlichkeit halber sind in Fig. 1 lediglich zwei verschiebbare Regalböden dargestellt. Es versteht sich von selbst, dass die Führungsschienenpaare je nach Größe der im Kommissionierregal zur Verfügung zu stellenden Montageteile in der Höhe entsprechend voneinander beabstandet sein können.

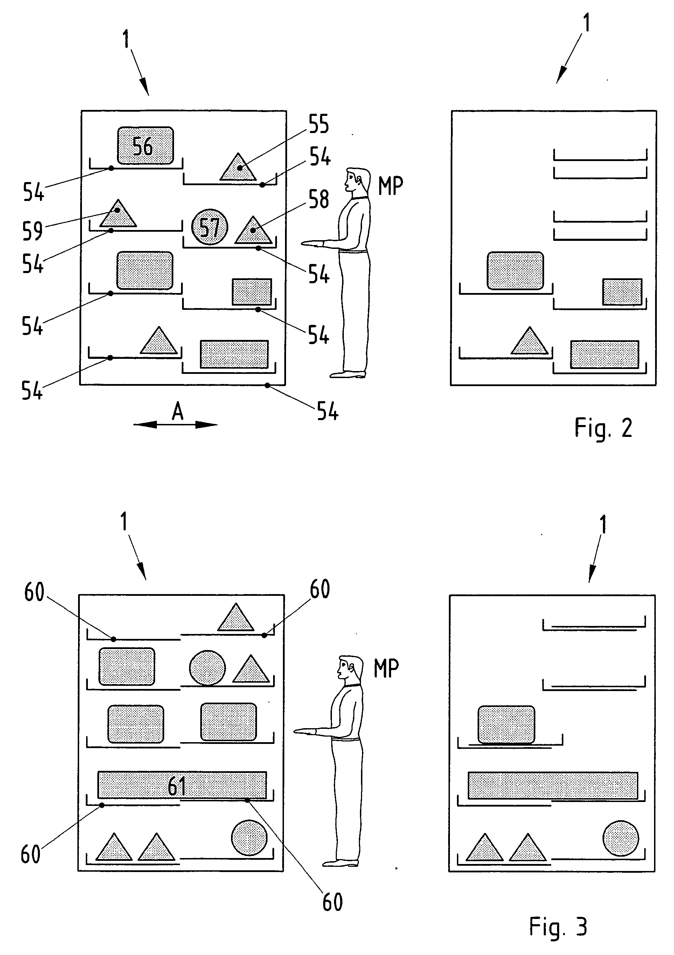

Eine mögliche Anordnung von Regalböden ist in Fig. 2 dargestellt. Dabei zeigt die linke Darstellung ein Kommissionierregal 1 in einer beladenen Situation, während auf der rechten Seite das Kommissionierregal 1 teilentleert ist. Es sind insgesamt hier acht gemäß Pfeilrichtung A verschiebbare Regalböden 54 vorgesehen. Das Montagepersonal MP kann zunächst von oben beginnend das Montageteil 55 aus dem Kommissionierregal entnehmen und den entsprechenden Regalboden 54 nach hinten verschieben. Daraufhin kann der oberste Regalboden mit dem Montageteil 56 nach vorne in Richtung Montagepersonal verschoben werden und von dort bequem entnommen werden. Alternativ kann das Montageteil 56 auch von der Rückseite - soweit zugänglich - vom Montagepersonal MP entnommen werden. Durch das Verschieben der beiden oberen entleerten Regalböden wird auf jeden Fall der darunter befindliche Regalboden mit seinen Montageteilen 57, 58 besser zugänglich. Analog können die Montageteile 57 und 58 zuerst entnommen werden und dann der Gegenstand 59. Die rechte Darstellung zeigt die entleerten Regalböden 54 des teilentleerten Kommissionierregals 1.

Eine zweite alternative Ausgestaltungsform der Erfindung zeigt die schematische Darstellung in Fig. 3. Dabei sind die Regalböden 60 in Führungsschienen angeordnet, die in unmittelbarer Anlage zueinander verlaufen. So können beide Regalböden 60 in teilentleerter Position, wie auf der rechten Seite in Fig. 3 dargestellt, nahezu übereinander geschoben werden. Der Vorteil dieser Ausgestaltungsform liegt darin, dass auch größere Montageteile, wie beispielsweise das Montageteil 61 im Kommissionierregal 1 zur Verfügung gestellt werden kann. Der geringfügige Absatz zwischen den beiden Regalböden 60 kann durch Weglassen der einander zugewandten Stirnwände minimiert werden.

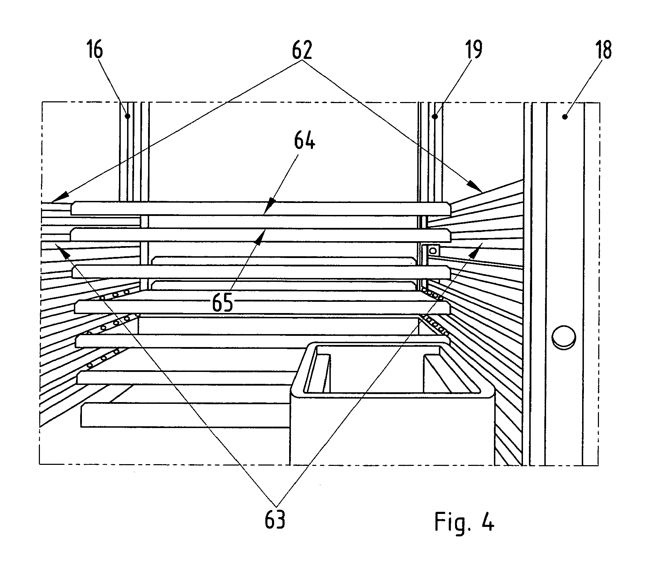

Eine detaillierte Darstellung der sich in unmittelbarer Anlage befindlichen Führungsschienen zeigt Fig. 4. Dabei sind zwei Führungsschienenpaare 62 und 63 unmittelbar aufeinander in den Schienen 16, 17, 18, 19 angeordnet. Wenn der obere Regalboden 64 in seine vorderste Anschlagsposition und der untere Regalboden 65 in seine hinterste Anschlagsposition verschoben wird, ergibt sich eine Aufliegefläche, die der Fläche des Grundrahmens 2 entspricht. Somit kann ein entsprechend großes Montageteil auf dieser Fläche abgelegt werden. Alternativ können die beiden Führungsnuten in einer einzigen Führungsschiene angeordnet sein, wobei zudem eine Weiche für das Übereinanderverschieben vorgesehen sein kann.

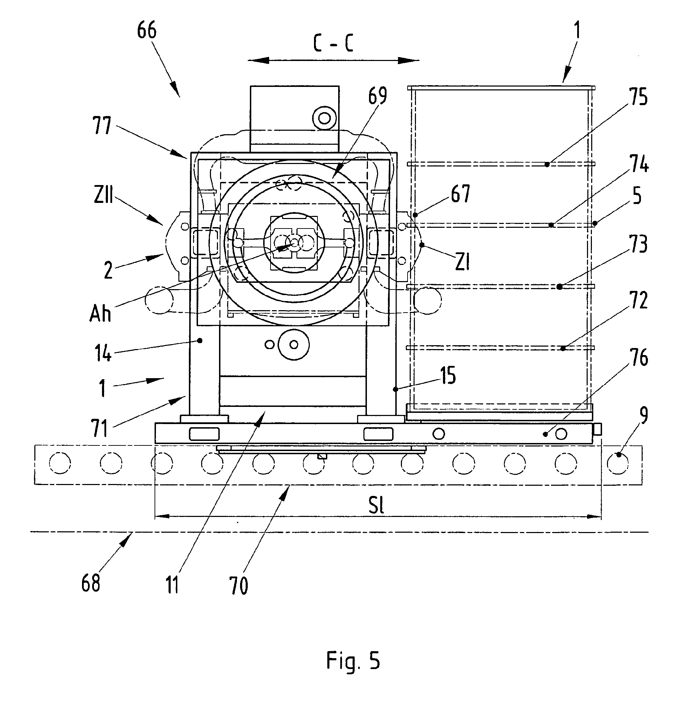

Eine mögliche Anordnung des erfindungsgemäßen Kommissionierregals 1 ist aus der Darstellung in Fig. 5 ersichtlich. Die dort dargestellte Einrichtung 66 dient zur Montage von einer Brennkraftmaschine 67 und ist innerhalb eines Produktionsgebäudes untergebracht, wobei besagte Einrichtung 66 auf einem Boden 68 des Produktionsgebäudes steht. Die Einrichtung 66 umfasst eine Aufnahmeeinrichtung 69 für die zu montierende Brennkraftmaschine 67 und das erfindungsgemäße Kommissionierregal 1 für Montagebauteile der Brennkraftmaschine. Zur Zugänglichkeit der Brennkraftmaschine 67 für das Montagepersonal MP ragt sie in vollem Umfang seitlich über ein Montageband 70 hinaus und sie ist an einem Aufnahmewagen 71 befestigt. Der Aufnahmewagen 71, auf dem zum vorteilhaften Zugang von Montageteilen auch das Kommissionierregal 1 mit den mehreren übereinander liegenden Regalböden 72, 73, 74 und 75 angeordnet ist, um fast eine auf dem Montageband 70 angebrachte, als Gewichtsausgleich für die Brennkraftmaschine 67 dienende Palette 76. Auf der Palette 76 ruht ein die Brennkraftmaschine 67 haltendes Traggestell 77.

## Patentansprüche

1. Kommissionierregal (1) für Montageteile mit mehreren, in unterschiedlichen Ebenen angeordneten Führungsvorrichtungen, in denen mindestens ein Regalboden (33, 34) verschiebbar gehalten ist, wobei der Regalboden (33, 34) flächenmäßig nur einen Teilbereich der von der Führungsvorrichtung aufgespannten Verschiebefläche einnimmt,
**dadurch gekennzeichnet,**
**dass** der Regalboden (33, 34) in seiner Führungsvorrichtung zwischen einem den Verschiebeweg begrenzenden vorderen Anschlag und einem hinteren Anschlag verschiebbar gehalten ist.

2. Kommissionierregal nach Anspruch 1,
**dadurch gekennzeichnet,**
**dass** die Führungsvorrichtung durch zwei gegenüberliegende Führungsschienen (20, 21, 22, 23) gebildet ist, von denen jeweils zwei ein Führungsschienenpaar (29, 30, 62, 63) bilden.

3. Kommissionierregal nach Anspruch 2,
**dadurch gekennzeichnet,**
**dass** sich die Führungsschienen (20, 21, 22, 23) auf gleicher Höhe zwischen zwei Pfosten (3, 4, 5, 6) erstrecken.

4. Kommissionierregal nach Anspruch 3,
**dadurch gekennzeichnet,**
**dass** die Pfosten (3, 4, 5, 6) auf den Ecken eines etwa rechteckigen Grundrahmens (2) aufrecht stehen.

5. Kommissionierregal nach Anspruch 4,
**dadurch gekennzeichnet,**
**dass** das obere Ende der Pfosten (3, 4, 5, 6) durch einen Tragrahmen (9) miteinander verbunden sind.

6. Kommissionierregal nach einem der vorgenannten Ansprüche,
**dadurch gekennzeichnet,**
**dass** der Regalboden (33, 34) an seinen den Führungsschienen (20, 21, 22, 23) jeweils zugewandten Seitenkanten einen Gleitstein (37, 38) aufweist.

7. Kommissionierregal nach einem der vorgenannten Ansprüche,
**dadurch gekennzeichnet,**
**dass** der Regalboden (33, 34) an seinen den Führungsschienen (20, 21, 22, 23) nicht zugewandten Seitenkanten eine nach oben abgewinkelte Stirnkante (47, 48, 49, 50) aufweist.

8. Kommissionierregal nach einem der vorgenannten Ansprüche,
**dadurch gekennzeichnet,**
**dass** der vordere bzw. hintere Anschlag durch eine Stirnfläche (39, 40, 43, 44) des jeweiligen Gleitsteins (37, 38) gebildet ist, der an einer Innenfläche (41, 42, 45, 46) des entsprechenden Pfostens (3, 4, 5, 6) anschlägt.

9. Kommissionierregal nach Anspruch 7 oder 8,
**dadurch gekennzeichnet,**
**dass** die nach oben abgewinkelte Stirnkante (48, 50) in Anschlagposition flächenbündig mit einer Außenfläche (51, 52) des Pfostens (4, 5) abschließt.

10. Kommissionierregal nach einem der vorgenannten Ansprüche,
**dadurch gekennzeichnet,**
**dass** in unmittelbarer Anlage über einem Führungsschienenpaar (63) ein zweites Führungsschienenpaar (62) angeordnet ist.
